# EUROPEAN PATENT SPECIFICATION

(11) **EP 3 312 004 B1**
(45) Date of publication and mention of the grant of the patent: **02.09.2020**
(21) Application number: 16811767.9
(22) Date of filing: 17.06.2016
(51) Int. Cl.: B32B 27/00, B32B 15/08, B32B 15/20, B65D 65/40, B65D 75/36, B65D 81/26, B32B 1/02, B32B 15/09, B32B 27/36, B32B 27/18, B32B 3/28

(54) **LAMINATE FOR USE IN BLISTER PACK, AND BLISTER PACK USING SAME**
LAMINAT ZUR VERWENDUNG IN EINER BLISTERPACKUNG UND BLISTERPACKUNG DAMIT
STRATIFIÉ POUR UNE UTILISATION DANS UNE PLAQUETTE ALVÉOLAIRE ET PLAQUETTE ALVÉOLAIRE L'UTILISANT

(30) Priority: 18.06.2015 JP 2015123073
(43) Date of publication of application: 25.04.2018
(73) Proprietor: Kyodo Printing Co., Ltd., Tokyo 112-8501 (JP)
(72) Inventor: HOSOI, Masayuki, Tokyo 112-8501 (JP); OGAWA, Naoki, Tokyo 112-8501 (JP); INOUE, Masa, Tokyo 112-8501 (JP); NARITA, Yuki, Tokyo 112-8501 (JP)
(74) Representative: Krauns, Christian
(86) International application number: PCT/JP2016/068177
(87) International publication number: WO 2016/204293

(56) References cited:
- EP-A1- 2 612 824
- WO-A1-2006/115264
- WO-A1-2012/029323
- WO-A1-2012/029899
- WO-A1-2015/004134
- JP-A- 2000 167 968
- JP-A- 2006 036 272
- JP-A- 2008 155 956
- JP-A- 2010 018 289
- US-A1- 2010 181 225

## Description

### TECHNICAL FIELD

The present invention relates to a laminate for a blister package (blister pack) and a blister package that uses said laminate.

### BACKGROUND ART

Although powdered pharmaceutical preparations are enclosed in thin-walled paper pouches or pouches made of plastic film, pharmaceutical preparations such as tablets or capsules are enclosed in blister packages referred to as press-through packages (PTP). The pharmaceutical preparation can be removed by breaking a sheet-like cover by pressing on the pharmaceutical preparation enclosed in the PTP with a finger. In addition, pharmaceutical preparations may also be enclosed in blister packages formed of two barrier laminates having a pocket for housing a pharmaceutical preparation, which are sealed in mutual opposition. In the case of this form, the blister package can also be used for powdered or liquid pharmaceutical preparations since the blister package is opened by ether cutting off one end of the blister package or pulling apart the two laminates.

Pharmaceutical preparations are subject to deterioration of the pharmacologically active ingredient thereof as a result of absorbing moisture. Consequently, a desiccant such as silica gel has conventionally been enclosed within an outer pouch that encloses the blister package. However, the work of placing a desiccant in the outer pouch is labor-intensive, and there is the risk of the desiccant being accidentally swallowed or consumed. In addition, there was also the problem of a low level of humidity being unable to be maintained within the blister package after opening the outer pouch, thereby resulting in progression of deterioration of the pharmaceutical preparation. Moreover, since certain pharmaceutical preparations are subject to oxidative degradation or emit a peculiar odor, there is also the need to be able to absorb gases such as oxygen or odorous gases present within the blister package.

In response thereto, Patent Document 1 discloses a technology whereby long-term stability of a pharmaceutical preparation is improved by laminating an adsorbing layer having an adsorbent within a blister package. In this technology, a dome-shaped pocket is first formed in a laminate consisting of a barrier layer in the form of a substrate and an absorbing layer. A pharmaceutical preparation in the form of a tablet is then placed in the pocket and sealed therein by a cover. According to this technology, the maintaining of a dry state, prevention of oxidation and efficient removal of odors are thought to be made possible even if a desiccant and the like is not included in the outer pouch.

In addition, since some pharmaceutical drugs are susceptible to ultraviolet light, if a transparent packaging container is used, there is the risk of degradation of the pharmacologically active ingredient. In response thereto, Patent Document 2 discloses a so-called aluminum blister package that employs a technology whereby an aluminum foil layer is also formed in the laminate for a blister package on the top side instead of only in a cover on the back side of the blister package. According to this technology, since an aluminum foil layer is provided in the blister package, although it is no longer possible to visualize the pharmaceutical preparation contained therein, ultraviolet light can be blocked and barrier properties can be further enhanced.

In an aspect that simply combines the aforementioned two technologies, problems such as rupturing of the roof of the dome or the formation of cracks in the skirt or shoulder of the dome occur when a dome-shaped pocket is formed in a laminate for a blister package. In order to overcome these problems, Patent Document 2 in particular discloses a laminate for a blister package having, in the following order, a substrate layer, aluminum foil layer, reinforcing layer and absorbing layer that is obtained by laminating a stiff reinforcing layer using a specific polymer between an aluminum foil layer and an absorbing layer.

The EP 2 612 824 A1 discloses a container including an absorbing layer absorbing at least one of a liquid and a gas; a reinforcing layer laminated on the absorbing layer with an adhesive layer interposed therebetween; an aluminum layer laminated on the reinforcing layer with an adhesive layer interposed therebetween; and a barrier layer laminated on the aluminum layer with an adhesive layer interposed therebetween and suppressing entry of at least one of liquid and gas.

The US 2010/181225 A1 discloses a pharmaceutical blister with a reduced permeability to water vapor and gas. It proposes to coat the conventional blisters with a silicon oxide-containing functional layer to protect against gases, water vapor and organic molecules. The WO 2015/004134 A1 discloses a double-shell blister packaging for medicinal contents comprising one or more cavityies of a similar shape to the medicinal content, said double-shell packaging being the assembly of a first and second multilayer structures sealed to each other, each multilayer structure comprising a seal layer, at least aluminium layer with a thickness of at least 20 µm, and two or more support layers, wherein said two or more support layers have a tensile strength at break in the machine direction and in the transversal direction of 200 N/mm² or more, and an elongation at break of 50 % or more.

### [Prior Art Documents]

### [Patent Documents]

Patent Document 1: International Publication No. WO 2006/115264
Patent Document 2: International Publication No. WO 2012/029323

### DISCLOSURE OF THE INVENTION

### [Problems to be Solved by the Invention]

In the laminate for a blister package of Patent Document 2, overall strength of the laminate is improved and forming defects are reduced by providing a stiff reinforcing layer. However, in the case of the laminate described in Patent Document 2, the inventors of the present invention found that, when contents such as a pharmaceutical preparation are contained in a blister package using this laminate and stored for a long period of time, moisture, organic gases and inorganic gases enter the absorbing layer through the reinforcing layer from the ends of the laminate resulting in the problem of deactivation of the absorbing layer.

Therefore, an object of the present invention is to provide a laminate for a blister package, which in addition to imparting adequate formablity when forming a dome-shaped pocket in the laminate for a blister package, inhibits deactivation of the absorbing layer caused by entry of moisture, organic gases and inorganic gases through a reinforcing layer from the ends of the laminate. In addition, an object of the present invention is to provide a blister package that uses this laminate.

### [Means for Solving the Problems]

The inventors of the present invention found that the aforementioned problems can be solved by the means indicated below.
[1] A laminate for a blister package, comprising, in the following order, a substrate layer, an aluminum foil layer, a reinforcing layer, a barrier film layer and an absorbing layer, wherein the barrier film layer contains a silica vapor-deposited film, aluminum vapor-deposited film, alumina vapor-deposited film, silica-alumina vapor-deposited film, vinylidene chloride-coated film, polyvinylidene fluoride-coated film or a combination thereof.
[2] The laminate for a blister package described in [1], wherein the water vapor transmission rate of the barrier film layer is 20 g/(m²·day) or less.
[3] The laminate for a blister package described in any of [1] to [2], wherein the substrate layer contains a resin selected from the group consisting of polyethylene-based resin, polyvinyl chloride, polyvinylidene chloride, polychlorotrifluoroethylene, polypropylene-based resin, saturated polyester, polyamide and mixtures thereof.
[4] The laminate for a blister package described in any of [1] to [3], wherein the reinforcing layer contains a resin selected from the group consisting of high density polyethylene, polyvinyl chloride, polypropylene-based resin, polyethylene terephthalate, polyamide and mixtures thereof.
[5] The laminate for a blister package described in any of [1] to [4], wherein the absorbing layer contains, in the following order, an outer skin layer on the side of the substrate layer, an absorbent-retaining layer having an absorbent and a binder resin, and an inner skin layer.
[6] A blister package, comprising the laminate described in any of [1] to [5], and a cover having an aluminum foil layer and a resin layer, wherein the absorbing layer of the laminate and the resin layer of the cover are at least partially adhered, a pocket is formed in the laminate, and contents can be contained between the laminate and the cover.
[7] A blister package, wherein two of the laminates described in any of [1] to [5] are at least partially adhered while mutually facing the absorbing layer, a pocket is formed in the two laminates, and contents can be contained in the pocket.
[8] A blister packaging product having the blister package described in [6] or [7] and contents contained in the pocket.

### [Effects of the Invention]

According to the present invention, by providing a barrier film layer between a reinforcing layer and an absorbing layer, entry of moisture, organic gases or inorganic gases through the reinforcing layer from the ends of the laminate and the resulting deactivation of the absorbing layer can be inhibited. The use of a blister package that uses this laminate makes it possible to store contents in a stable state for a long period of time.

### BRIEF DESCRIPTION OF THE DRAWINGS

FIG. 1 is a schematic view of a blister package of the present invention.
FIG. 2 is a schematic view showing another example of the blister package of the present invention.
FIG. 3 is a schematic view of the layer structure of the blister package of the present invention.
FIG. 4 is a graph indicating the results of an absorption rate test.

### BEST MODE FOR CARRYING OUT THE INVENTION

### <Laminate for Blister package>

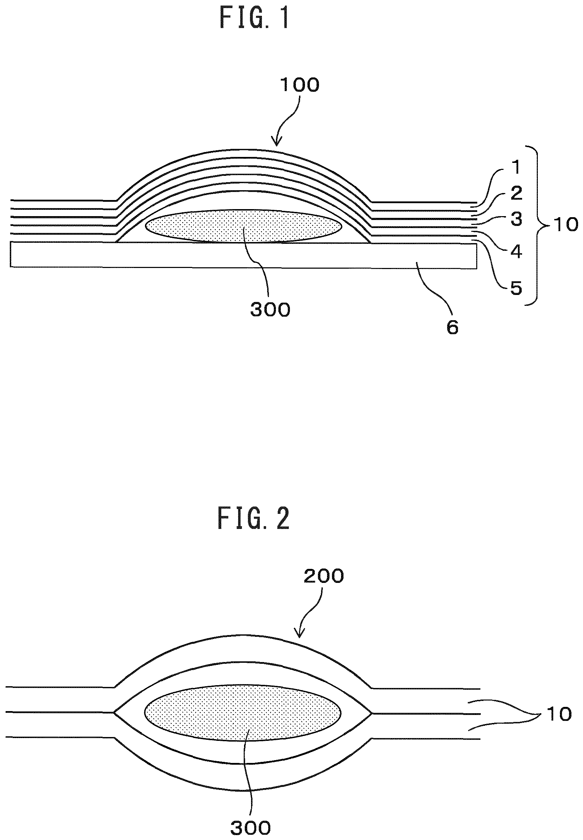

The laminate for a blister package of the present invention contains, in the following order, a substrate layer, an aluminum foil layer, a reinforcing layer, a barrier film layer and an absorbing layer. In addition, the laminate for a blister package of the present invention may have an adhesive layer between any two layers among the substrate layer, aluminum foil layer, reinforcing layer, barrier film layer and absorbing layer. For example, as shown in FIG. 1, a laminate for a blister package 10 of the present invention has a substrate layer 1, an aluminum foil layer 2, a reinforcing layer 3, a barrier film layer 4 and an absorbing layer 5. Preferably, the laminate for a blister package 10 of the present invention contains, or is composed of, in the following order, the outermost substrate layer 1, the aluminum foil layer 2, the reinforcing layer 3, the barrier film layer 4 and the absorbing layer 5.

Furthermore, in the present description, although a "laminate composed of a layer A and a layer B" refers to a laminate substantially only comprising the layer A and the layer B, it also means that the laminate may also comprise other layers in addition to the layer A and the layer B if the advantageous effects of the present invention can be obtained in spite of the presence of the other layers or if the advantageous effects are not lost due to the other layers. For example, the laminate may be expressed as a "laminate composed of a layer A and a layer B", even if an anchor coat layer and the like is formed between the layer A and the layer B.

Examples of methods used to laminate at least two layers among the substrate layer, aluminum foil layer, reinforcing layer, barrier film layer and absorbing layer include dry lamination and sandwich lamination. Dry lamination is a lamination method whereby an adhesive is coated and dried followed by applying pressure to cure the adhesive. In addition, sandwich lamination is a lamination method whereby a resin or adhesive resin composing each of the melted layers is extruded between a substrate and a film on the laminated side.

A pocket for containing contents such as a pharmaceutical preparation is formed in the laminate for a blister package. Examples of forming methods used when forming the pocket include plate-type air pressure forming, plug assist air pressure forming, drum-type vacuum forming and plug forming. Among these, plug forming is preferably for forming the pocket wherein the method uses a cylindrical rod (plug) having a round tip made of ultra-high molecular weight polyethylene resin having a viscosity-average molecular weight in excess of 1 million.

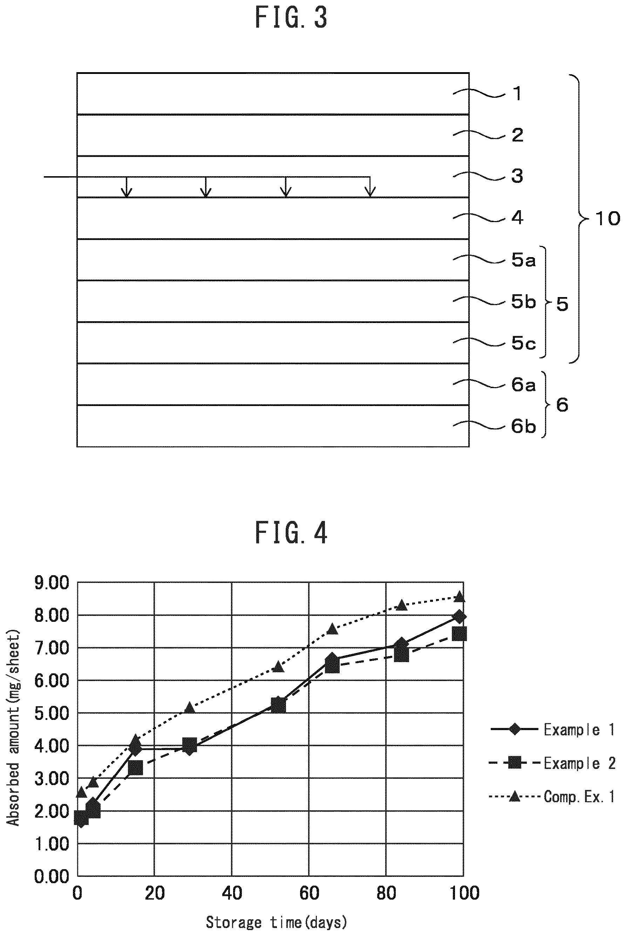

In the laminate for a blister package of the present invention shown in FIG. 3, by laminating the barrier film layer 4 between the reinforcing layer 3 and the absorbing layer 5, entry of water, organic gases or inorganic gases through the reinforcing layer 3 from the ends of the laminate for a blister package 10, as indicated by the arrows, is prevented and deactivation of the absorbing layer 5 is inhibited.

### (Substrate Layer)

The substrate layer is able to serve as the outermost layer of the laminate for a blister package. There are no particular limitations on the resin used for the substrate layer provided it is a resin that imparts suitable barrier properties and formablity to the laminate for a blister package. Examples thereof include polyethylene-based resin, polyvinyl chloride, polyvinylidene chloride, polychlorotrifluoroethylene, polypropylene-based resin, saturated polyester, polyamide (such as Nylon, Nylon 6, Nylon 6,6 or Nylon MXD6) and mixtures thereof. The resin is preferably that which is able to prevent entry of moisture from the outside and demonstrate superior moisture resistance, examples of which include polypropylene-based resin, polyamide and saturated polyester in particular.

Furthermore, in the present description, polyethylene-based resin refers to a resin containing 30 mol% or more, 40 mol% or more, 50 mol% or more, 60 mol% or more, 70 mol% or more or 80 mol% or more of repeating units consisting of ethylene groups in the main chain of the polymer, and is selected from the group consisting of, for example, low density polyethylene (LDPE), linear low density polyethylene (LLDPE), medium density polyethylene (MDPE), high density polyethylene (HDPE), ethylene-acrylic acid copolymer (EAA), ethylene-methacrylic acid copolymer (EMAA), ethylene-ethyl acrylate (EEA), ethylene-methacrylate copolymer (EMA), ethylene-vinyl acetate copolymer (EVA), carboxylic acid-modified ethylene, carboxylic acid-modified ethylene-vinyl acetate copolymer, derivatives thereof and mixtures thereof.

In the present description, polypropylene-based resin refers to a resin having 30 mol% or more, 40 mol% or more, 50 mol% or more, 60 mol% or more, 70 mol% or more or 80 mol% or more of repeating units consisting of propylene groups in the main chain of the polymer, and is selected from the consisting of, for example, polypropylene (PP) homopolymer, random polypropylene (random PP), block polypropylene (block PP), chlorinated polypropylene, carboxylic acid-modified polypropylene, derivatives thereof and mixtures thereof.

The thickness of the substrate layer may be 10 µm or more, 20 µm or more or 30 µm or more, and 300 µm or less, 200 µm or less, 100 µm or less or 50 µm or less.

### (Aluminum Foil Layer)

The aluminum foil layer is used to provide the laminate with moisture and gas barrier properties. The aluminum foil of the aluminum foil layer may be pure aluminum-based aluminum foil or aluminum alloy-based aluminum foil. The thickness of the aluminum foil layer in order to impart suitable formablity and elasticity to the laminate for a blister package may be 7 µm or more, 10 µm or more or 20 µm or more and 60 µm or less, 50 µm or less or 40 µm or less.

### (Reinforcing Layer)

The reinforcing layer is a resin layer used to improve formablity and elasticity of the laminate for a blister package. Examples of resins used in the first reinforcing layer include high density polyethylene, polyvinyl chloride, polypropylene-based resin, polyester (such as polyethylene terephthalate), polyamide (such as Nylon, Nylon 6, Nylon 6,6 or Nylon MXD6) and mixtures thereof. The thickness of the first reinforcing layer may be 10 µm or more, 15 µm or more, 25 µm or more, 30 µm or more, 40 µm or more or 50 µm or more, and 100 µm or less, 80 µm or less, 60 µm or less or 50 µm or less.

### (Barrier Film Layer)

The barrier film layer is used to prevent moisture, organic gases or inorganic gases, which have penetrated from the ends of the laminate through the reinforcing layer, from reaching the absorbing layer. From the viewpoint of, for example, preventing entry of moisture, the water vapor transmission rate of a film used for the barrier layer film is preferably 20 g/(m²·day) or less, 15 g/(m²·day) or less, 10 g/(m²·day) or less, 7 g/(m²·day) or less, 5 g/(m²·day) or less, 3 g/(m²·day) or less or 1 g/(m²·day) or less.

More specifically, examples of films used for the barrier film layer include a silica vapor-deposited film, aluminum vapor-deposited film, alumina vapor-deposited film and silica-aluminum vapor-deposited film, polyvinylidene chloride-coated film and polyvinylidene fluoride-coated film, and combinations thereof. In particular, examples of films used for the barrier film layer include an aluminum vapor-deposited polyester film, aluminum vapor-deposited polypropylene film, alumina vapor-deposited polyester film, silica vapor-deposited film, silica-aluminum vapor-deposited film, silica-aluminum vapor-deposited Nylon film, polyvinylidene chloride-coated film and polyvinylidene fluoride-coated film and combinations thereof.

The thickness of the barrier film layer may be 7 µm or more, 10 µm or more, 15 µm or more or 25 µm or more, and 60 µm or less, 50 µm or less, 40 µm or less, 30 µm or less or 20 µm or less.

### (Absorbing Layer)

The absorbing layer is a layer that has the function of absorbency, and the long-term stability of contents can be improved by this layer. Although the absorbing layer may be a single absorbent-retaining layer containing an absorbent and a binder resin, it preferably contains, in the following order, an outer skin layer, absorbent-retaining layer containing an absorbent and binder resin, and an inner skin layer. In this case, the absorbent contained in the absorbent-retaining layer can be prevented from coming out during use, and is used while sandwiched between the upper and lower skin layers since this facilitates production of the absorbing layer.

The outer skin layer is a layer used on the opposite side of the side containing the contents of the blister package (outside), while the inner skin layer is a layer used on the side containing the contents (inside). As shown in FIG. 1, in the laminate for a blister package 10 of the present invention, the absorbing Layer 5 can be used with laminating the substrate layer 1, the aluminum foil layer 2, the reinforcing layer 3, and the barrier film 4 together. In addition, as shown in FIG. 3, for example, the absorbing layer 5 has an outer skin layer 5a, an absorbent-retaining layer 5b and an inner skin layer 5c.

The absorbent layer of the single absorbent-retaining layer can be produced by injection forming or extrusion forming such as inflation forming or T-die forming. In addition, an absorbing layer having a three-layer structure comprised of an outer skin layer, absorbent-retaining layer and inner skin layer can be produced by multilayer inflation forming. This method consists of producing a multilayer film by simultaneously co-extruding a plurality of resins into the shape of a tube with a plurality of extruding machines and then inflating the resins by blowing in air. In addition, an absorbing layer having a three-layer structure can be produced by forming the absorbent-retaining layer into the form of a film or sheet by extrusion forming or injection forming using the inflation method or T-die method, and then laminating the outer skin layer and inner skin layer by sandwiching the absorbent-retaining layer after having formed into films by a known method.

From the viewpoint of obtaining suitable formablity and elasticity, the thickness of the absorbing layer may be 50 µm or more, 60 µm or more or 70 µm or more, and 200 µm or less, 100 µm or less, 90 µm or less or 80 µm or less.

### <Inner Skin Layer and Outer Skin Layer>

The inner skin layer and outer skin layer mainly comprise resin, and although they are able to contain an amount absorbent less than the that contained in the absorbent-retaining layer, the inner skin layer and outer skin layer preferably do not contain absorbent in consideration of the likelihood of the absorbent coming out during production or use of the blister package as well as ease of production of the absorbing layer. Examples of resins used for the inner skin layer and outer skin layer include polyethylene-based resin, polypropylene-based resin, polymethylpentene, saturated polyester, polyvinyl chloride, polystyrene, polycarbonate, polyamide, thermoplastic elastomers and mixtures thereof.

From the viewpoint of obtaining suitable formablity and elasticity, the thickness of the inner skin layer and outer skin layer is 5 µm or more, 10 µm or more or 20 µm or more, and 50 µm or less, 40 µm or less, 30 µm or less, 20 µm or less or 15 µm or less.

### <Absorbent-Retaining Layer>

The absorbent-retaining layer has a structure in which the absorbent is dispersed in a binder resin. The absorbent-retaining layer functions as a layer that absorbs moisture, organic gases and inorganic gases within the blister package.

Examples of absorbents able to be used in the absorbent-retaining layer include inorganic absorbents such as chemical absorbents in the manner of calcium oxide, calcium chloride, calcium sulfate, magnesium sulfate or sodium sulfate, or physical absorbents in the manner of aluminum oxide, quicklime, silica gel or inorganic molecular sieves. Examples of inorganic molecular sieves include, but are not limited to, aluminosilicate minerals, clay, porous glass, microporous activated carbon, zeolite, activated carbon and compounds having an opening structure capable of allowing small molecules such as water to disperse therein. These inorganic absorbents allow the obtaining of high absorbency even at low temperatures, and absorbents able to demonstrate high absorbency even in environments at low relative humidity are particularly preferable for absorbing trace amounts of moisture contained in blister packages.

Examples of zeolite that can be used include natural zeolite, artificial zeolite and synthetic zeolite. Zeolite is a porous, granular substance used to separate substances according to differences in molecular size, has a structure consisting of uniform pores, and since it has the action of a type of sieve by absorbing small molecules that enter the cavities of the pores thereof, is capable of absorbing water (including steam and water vapor), organic gases and inorganic gases. An example of synthetic zeolite is a molecular sieve, and among these, molecular sieves having a pore diameter (absorption opening) of 0.3 nm to 1 nm in particular can be used. Normally, molecular sieves having a pore diameter of 0.3 nm, 0.4 nm, 0.5 nm or 1 nm are respectively referred to as molecular sieve 3A, molecular sieve 4A, molecular sieve 5A and molecular sieve 13X. A molecular sieve having an average particle diameter (particle diameter having an integrated value of 50% in a particle size distribution determined by laser diffraction scattering) of, for example, about 10 µm is used as a molecular sieve. In the present invention, different types of zeolite can be used as is appropriate according to such factors as the contents to be absorbed or the properties of those contents.

In addition, hydrophobic zeolite is used preferably particularly in the case of absorbing organic gas. Hydrophobic zeolite is the generic term for so-called high-silica zeolite in which the silica:alumina ratio has been enhanced by reducing the amount of aluminum atoms in the crystalline framework by subjecting to dealumination treatment. Hydrophilic zeolite refers to zeolite that more strongly absorbs non-polar substances as a result of losing affinity for polar substances such as water, thereby making it easier to absorb organic gases and the like. Hydrophobic zeolite in the form of a hydrophobic molecular sieve having a pore diameter of 0.6 nm to 0.9 nm can be used, and examples thereof include Abscents 1000, Abscents 2000 and Abscents 300 (manufactured by Union Showa K.K.). Pore diameter can be confirmed by structural analysis using X-ray diffraction. In addition, the average particle diameter (particle diameter having an integrated value of 50% in a particle size distribution determined by laser diffraction scattering) of the hydrophobic zeolite used is, for example, 3 µm to 5 µm.

In the case the absorbent is an oxygen absorbent, an inorganic oxygen absorbent such as cerium oxide, titanium oxide or iron powder may be used, or an organic oxygen absorbent such as polyvalent phenol compounds or ascorbic acid may be used. Examples of polyvalent phenol compounds include phenol, catechol, gallic acid, resorcinol, hydroquinone, benzenetriol, cresol and tannin.

From the viewpoint of absorption capacity, the absorbent can be contained in the absorbent-retaining layer within the range of 10% by weight or more, 20% by weight or more, 30% by weight or more, 40% by weight or more or 50% by weight or more based on the weight of the absorbent-retaining layer, and from the viewpoint of dispersibility in the binder resin and formablity, can be contained within the range of 70% by weight or less, 60% by weight or less, 50% by weight or less or 40% by weight or less.

Examples of binder resins able to be used in the absorbent-retaining layer include polyethylene-based resin, polypropylene-based resin, saturated or unsaturated polyester, ionomers, polyvinyl chloride (PVC), polystyrene, derivatives thereof and mixtures thereof.

The thickness of the absorbent-retaining layer from the viewpoints of absorption capacity, formablity and elasticity may be 10 µm or more, 20 µm or more, 30 µm or more or 50 µm or more, and 500 µm or less, 300 µm or less, 200 µm or less, 150 µm or less or 100 µm or less.

### (Adhesive Layer)

The laminate for a blister package of the present invention may have an adhesive layer between any two layers among the substrate layer, aluminum foil layer, reinforcing layer, barrier film layer and absorbing layer. Examples of adhesives that may be used in this adhesive layer include urethane-based adhesives, olefin-based adhesives, butyl rubber-based adhesives, acrylic resin-based adhesives, polyester resin-based adhesives, epoxy resin-based adhesives and silicone resin-based adhesives in the case of adhering by dry lamination, or polyethylene-based resins in the case of adhering by sandwich lamination.

### (Blister Package and Blister Packaging Product)

The blister package of the present invention has the aforementioned laminate for a blister package and a cover. The absorbing layer of the laminate for a blister package and the cover are at least partially adhered. A blister packaging product containing contents within a pocket of the blister package can be fabricated by forming a pocket for containing contents such as a pharmaceutical preparation in the laminate for a blister package followed by adhering to the cover.

The cover contains, for example, a resin layer and a metal layer. A thermoplastic resin can be used for the resin layer. In addition, aluminum foil such as pure aluminum foil or aluminum alloy foil can be used for the metal layer. The cover is preferably of a form in which the aluminum foil is coated with the thermoplastic resin layer, and the thermoplastic resin of the cover and the layer (absorbing layer) used to adhere to the laminate for a blister package can contain the same resin from the viewpoint of enhancing adhesion. In addition, a form can also be adopted in which the aluminum foil is coated with an easy peeling resin such as a polyolefin-based polymer alloy or has an easy peeling film laminated thereon. In this case, contents can be removed easily since the blister package and cover are made to separate at the adhesive interface.

In another aspect of the blister package of the present invention, two laminates selected form the aforementioned laminates for a blister package are at least partially adhered while mutually opposing the absorbing layer. After having formed a pocket for containing contents in both of the laminates for a blister package, the contents are contained in the pocket and the absorbing layers of the two laminates for a blister package are adhered, thereby enabling the production of a blister packaging product containing contents in the pocket of a blister package.

There are no particular limitations on the content of the blister package of the present invention provided it is a substance that is susceptible to deterioration by contact with the outside air, and examples thereof include not only pharmaceutical preparations, but also foods, cosmetics, medical devices and electronic components. In addition, examples of pharmaceutical preparations include not only pharmaceutical preparations, but also detergents and agricultural chemicals.

FIG. 1 is a schematic view of a blister package 100. Here, a cover 6 is adhered to the laminate for a blister package 10 comprising, in the following order, the substrate layer 1, the aluminum foil layer 2, the reinforcing layer 3, the barrier film layer 4 and absorbing layer 5, and contents 300 are enclosed in a dome-shaped pocket formed in the laminate 10. Although not shown in the drawing, an adhesive layer is present between the substrate film and the absorbing film.

FIG. 2 is a schematic view of another aspect of a blister package 200. The absorbing layers of two laminates for a blister package 10 are adhered, and the contents 300 are enclosed in a pocket formed in the laminates 10.

FIG. 3 is a schematic view of the layer structure of the blister package 100 of the present invention. This view shows an end of the blister package 100 where the pocket is not formed, and the cover 6 is adhered to the laminate for a blister package 10 comprising, in the following order, the substrate layer 1, the aluminum foil layer 2, the reinforcing layer 3, the barrier film layer 4 and the absorbing layer 5. The absorbing layer 5 is composed of the outer skin layer 5a, the absorbent-retaining layer 5b and the inner skin layer 5c, and the cover 6 is composed of a thermoplastic resin layer 6a and a metal layer 6b.

### [Examples]

### (Sample Production)

Laminates for a blister package of Examples 1 and 2 and Comparative Example 1 were produced having the compositions shown in Table 1 while changing only the barrier film layer. An aluminum vapor-deposited PET film (VM-PET1310, Toray Advanced Film Co., Ltd.) was used in Example 1, while an alumina vapor-deposited PET film (GX-P-F, Toppan Printing Co., Ltd.) was used in Example 2.

### (Production of Absorbing Layer)

Resin pellets of linear low density polyethylene (LLDPE) (Evolue SP2520, Prime Polymer Co., Ltd.) were prepared for use as materials of the inner and outer skin layers. A material for the absorbent-retaining layer in the form of low density polyethylene (LDPE) (Petrocene 202, Tosoh Corp.) and a moisture absorbent in the form of zeolite (Molecular Sieve 4A, Union Showa K.K.) were placed in a kneading extruder and kneading while heating and melting the resin, followed by extruding with the extruder and then cooling to obtain resin pellets for the absorbent-retaining layer. The zeolite content in the pellets for the absorbent-retaining layer was 46% by weight based on the weight of the pellets. A film serving as the absorbing layer was then formed by coextrusion forming with an air-cooled inflation forming machine using the resin pellets for the inner and outer skin layers and the resin pellets for the absorbent-retaining layer. Inflation forming was carried out with a three-layer inflation forming machine (TUL-600R, Placo Co., Ltd.) at a resin temperature of 170°C and a feeding speed of 10 m/min.

### (Production of Laminate)

A laminate comprising, in the following order, substrate layer, aluminum foil layer and reinforcing layer were all formed by dry lamination, using polyamide film (Nylon) for the substrate layer and using polyvinyl chloride resin (PVC, Sumilite® VSS-6701, Sumitomo Bakelite Co., Ltd.) for the reinforcing layer. At that time, a urethane-based adhesive containing a main agent (Takelac® XA1151, Mitsui Chemicals, Inc.) and a curing agent (Takenate® A12, Mitsui Chemicals, Inc.) at a weight ratio of 9:1 was used for the adhesive. Furthermore, the coated amount of adhesive between each layer was 0.8 g/m². Following lamination, aging was carried out by storing for 7 days in an environment at 40°C to allow the adhesive to cure.

A barrier layer and an absorbing layer were sequentially laminated by sandwich lamination on the reinforcing layer in Examples 1 and 2, or an absorbing layer was laminated by sandwich lamination on the reinforcing layer in Comparative Example 1, while interposing adhesive layers there between to obtain laminates for a blister package. Sandwich lamination was carried out with a sandwich laminator (RP45.45, Placo Co., Ltd.) at a resin temperature of 300°C, extruded resin thickness of 15 µm and feeding speed of 30 m/min to 45 m/min using low density polyethylene (Suntec L1850K, Asahi Kasei Chemicals Corp.) for the adhesive resin.

### <Evaluation: Absorption Rate Test>

### (Lamination of Laminate for Blister package and Cover)

The laminates for a blister package obtained in the manner described above were laminated with a laminate for sealing. The laminate for sealing was obtained by dry lamination of PET (thickness: 12 µm), aluminum foil (thickness: 9 µm) and linear low density polyethylene (LLDPE). An aforementioned laminate for a blister package was placed on a lower roller and the aforementioned laminate for sealing was placed on an upper roller followed by repeating heat lamination three times using a heat laminator (MRK-350K, MCK Co., Ltd.) under conditions of an upper heating roller temperature of 160°C, lower heating roller temperature of 170°C, line speed of 0.5 m/min and roller pressure of 0.1 MPa. As a result, test laminates were obtained by laminating a laminate for a blister package and the laminate for sealing. Furthermore, since the objective of this test was to measure absorption rate from the ends of the laminate for a blister package, the entire surfaces of the laminates for a blister package and laminate for sealing were laminated uniformly.

### (Absorption Rate Test)

The aforementioned test laminates were cut out to a size of 150 mm × 60 mm, and the end on which the absorbing layer of the laminate for a blister package is not deactivated was exposed. After having cut out the test laminates, the weights thereof were promptly measured to obtain an initial value. Subsequently, the test laminates were then stored in a constant temperature, constant humidity chamber in an environment at 40°C and 75% RH. The aforementioned test laminates were placed in an aluminum pouch containing 30 g of desiccant followed by sealing the aluminum pouch at each elapsed time. After seasoning the aluminum pouches for 3 hours in an environment at 23°C and 50% RH, the test laminates were removed from the aluminum pouches followed by measuring the weights thereof. The absorbed amount (mg/sheet) was determined by subtracting the initial value from the measured weight at each elapsed time. Those results are shown in Table 1 and FIG. 4.

As can be understood from the results of Table 1 and FIG. 4, in Examples 1 and 2 provided with a barrier film layer between the reinforcing layer and absorbing layer, the amounts of moisture absorbed by the test laminates were determined to be inhibited relative to that of Comparative Example 1 not provided with a barrier film layer.

### (Water Vapor Transmission Rate of Barrier Film Layer)

The water vapor transmission rate of each barrier film layer was measured using a water vapor transmission rate tester (Permatran-W398 MA, Mocon Inc.) under conditions of 40°C and 90% RH. Those results are shown in Table 1.

**[Table 1]**

| | | Thickness [µm] | Example 1 | Example 2 | Comp. Ex. 1 |
|---|---|---|---|---|---|
| Substrate layer | | 25 | Nylon | Nylon | Nylon |
| Aluminum foil layer | | 40 | Aluminum foil | Aluminum foil | Aluminum foil |
| Reinforcing layer | | 60 | PVC | PVC | PVC |
| Barrier film layer (*water vapor transmission rate) | | 12 | Aluminum vapor-deposited PET (9 g/m²·day) | Alumina vapor-deposited PET (0.2 g/m² ·day) | - |
| Absorbing layer | Outer skin layer | 20 | LLDPE | LLDPE | LLDPE |
| | Absorbent-retaining layer | 90 | Zeolite 46 wt% + LDPE 54 wt% | Zeolite 46 wt% + LDPE 54 wt% | Zeolite 46 wt% + LDPE 54 wt% |
| | Inner skin layer | 20 | LLDPE | LLDPE | LLDPE |
| Absorption Rate Test | | Storage time (days) | Absorbed amount (mg/sheet) | | |
| | | 1 | 1. 69 | 1.78 | 2.56 |
| | | 4 | 2.20 | 1.98 | 2.87 |
| | | 15 | 3.88 | 3.31 | 4.17 |
| | | 29 | 3.9 | 4.01 | 5.15 |
| | | 52 | 5.29 | 5.23 | 6.41 |
| | | 66 | 6.63 | 6.43 | 7.56 |
| | | 84 | 7.10 | 6.76 | 8.29 |
| | | 99 | 7.94 | 7.41 | 8.55 |

As can be understood from Table 1 and FIG. 4, a correlation was observed between water vapor transmission rate of the barrier film layer and the amount of moisture absorbed by the test laminates, thereby demonstrating that a barium film layer having a low water vapor transmission rate is suitable.

### BRIEF DESCRIPTION OF THE REFERENCE SYMBOLS

- 100, 200: Blister package
- 300: Contents
- 10: Laminate for blister package
- 1: Substrate layer
- 2: Aluminum foil layer
- 3: Reinforcing layers
- 4: Barrier film layer
- 5: Absorbing layer
- 6: Cover
- 5a: Outer skin layer
- 5b: Absorbent-retaining layer
- 5c: Inner skin layer
- 6a: Thermoplastic resin layer
- 6b: Metal layer

## Claims

1. A laminate (10) for a blister package (100, 200), comprising, in the following order, a substrate layer (1), an aluminum foil layer (2), a reinforcing layer (3), a barrier film layer (4) and an absorbing layer (5), wherein the barrier film layer (4) contains a silica vapor-deposited film, aluminum vapor-deposited film, alumina vapor-deposited film, silica-alumina vapor-deposited film, vinylidene chloride-coated film, polyvinylidene fluoride-coated film or a combination thereof.

2. The laminate (10) for a blister package (100, 200) according to claim 1, wherein the water vapor transmission rate of the barrier film layer (4) is 20 g/(m²·day) or less.

3. The laminate (10) for a blister package (100, 200) according to claim 1 or 2, wherein the substrate layer (1) contains a resin selected from the group consisting of polyethylene-based resin, polyvinyl chloride, polyvinylidene chloride, polychlorotrifluoroethylene, polypropylene-based resin, saturated polyester, polyamide and mixtures thereof.

4. The laminate (10) for a blister package (100, 200) according to any one of claims 1 to 3, wherein the reinforcing layer (3) contains a resin selected from the group consisting of high density polyethylene, polyvinyl chloride, polypropylene-based resin, polyethylene terephthalate, polyamide and mixtures thereof.

5. The laminate (10) for a blister package (100, 200) according to any one of claims 1 to 4, wherein the absorbing layer (5) contains, in the following order, an outer skin layer (5a) on the side of the substrate layer (1), an absorbent-retaining layer (5b) having an absorbent and a binder resin, and an inner skin layer (5c).

6. A blister package (100, 200), comprising the laminate (10) according to any one of claims 1 to 5, and a cover (6) having an aluminum foil layer (2) and a resin layer (6a), wherein the absorbing layer (5) of the laminate (10) and the resin layer (6a) of the cover (6) are at least partially adhered, and a pocket is formed in the laminate (10) so that contents (300) can be contained between the laminate (10) and the cover (6).

7. A blister package (100, 200), wherein two of the laminates (10) according to any one of claims 1 to 5 are at least partially adhered while mutually facing the absorbing layer (5), and a pocket is formed in the two laminates (10) so that contents (300) can be contained in the pocket.

8. A blister packaging product having the blister package (100, 200) according to claim 6 or 7 and contents (300) contained in the pocket.

## Patentansprüche

1. Laminat (10) für eine Blisterpackung (100, 200), welches in der folgenden Reihenfolge eine Substratschicht (1), eine Aluminiumfolienschicht (2), eine verstärkende Schicht (3), eine Barrierefilmschicht (4) und eine absorbierende Schicht (5) aufweist, wobei die Barrierefilmschicht (4) einen mit einem Siliziumdioxid dampfbeschichteten Film, einen mit einem Aluminium dampfbeschichteten Film, einen mit einem Aluminiumoxid dampfbeschichteten Film, einen mit einem Siliziumdioxid und einen mit einem Aluminiumoxid beschichteten Film, einen mit einem Vinylidenchlorid beschichteten Film, einen mit einem Polyvinylidenfluorid beschichteten Film oder eine Kombination davon enthält.

2. Laminat (10) für eine Blisterpackung (100, 200) nach Anspruch 1, wobei die Wasserdampfdurchlässigkeit der Sperrfilmschicht (4) 20 g/(m² · Tag) oder weniger beträgt.

3. Laminat (10) für eine Blisterpackung (100, 200) nach Anspruch 1 oder 2, wobei die Substratschicht (1) ein Harz enthält, das aus der Gruppe ausgewählt worden ist, die ein Harz auf Basis von Polyethylen, ein Polyvinylchlorid, ein Polyvinylidenchlorid, ein Polychlortrifluorethylen, ein Harz auf Basis von Polypropylen, ein gesättigtes Polyester, ein Polyamid und Gemische davon umfasst.

4. Laminat (10) für eine Blisterpackung (100, 200) nach einem der Ansprüche 1 bis 3, wobei die verstärkende Schicht (3) ein Harz enthält, das aus der Gruppe ausgewählt worden ist, die ein Polyethylen hoher Dichte, ein Polyvinylchlorid, ein Harz auf Basis von Polypropylen, ein Polyethylenterephthalat, ein Polyamid und Gemische davon.

5. Laminat (10) für eine Blisterpackung (100, 200) nach einem der Ansprüche 1 bis 4, wobei die absorbierende Schicht (5) in der folgenden Reihenfolge eine äußere Hautschicht (5a) an der Seite der Substratschicht (1), eine absorbierende Rückhalteschicht (5b), die ein absorbierendes Harz und ein bindendes Harz aufweist, und eine innere Hautschicht (5c) enthält.

6. Blisterpackung (100, 200), welche das Laminat (10) nach einem der Ansprüche 1 bis 5 und eine Abdeckung (6) mit einer Aluminiumfolienschicht (2) und einer Harzschicht (6a) aufweist, wobei die absorbierende Schicht (5) des Laminats (10) und die Harzschicht (6a) der Abdeckung (6) zumindest teilweise verbunden sind, und wobei in dem Laminat (10) eine Tasche ausgebildet ist, so dass ein Inhalt (300) zwischen dem Laminat (10) und der Abdeckung (6) enthalten sein kann.

7. Blisterpackung (100, 200), wobei zwei der Laminate (10) nach einem der Ansprüche 1 bis 5 zumindest teilweise verbunden sind, während sie gemeinsam der absorbierenden Schicht (5) zugewandt sind, und eine Tasche in den zwei Laminaten (10) ausgebildet ist, so dass ein Inhalt (300) in der Tasche enthalten sein kann.

8. Blisterverpackungsprodukt mit der Blisterverpackung (100, 200) nach Anspruch 6 oder 7 und dem Inhalt (300), der in der Tasche enthalten ist.

## Revendications

1. Stratifié (10) d'un emballage blister (100, 200), comprenant, dans l'ordre suivant, une couche de substrat (1), une couche de papier d'aluminium (2), une couche de renfort (3), une couche de film barrière (4) et une couche absorbante (5), où la couche de film barrière (4) contient un film de silice déposé en phase vapeur, un film d'aluminium déposé en phase vapeur, un film d'alumine déposé en phase vapeur, un film de silice -alumine déposé en phase vapeur, un film revêtu de chlorure de vinylidène, un film revêtu de polyfluorure de vinylidène, ou une association de ceux-ci.

2. Stratifié (10) d'un emballage blister (100, 200) selon la revendication 1, où la vitesse de transmission de la vapeur d'eau de la couche de film barrière (4), est égale ou inférieure à 20 g / (m²• jour).

3. Stratifié (10) d'un emballage blister (100, 200) selon la revendication 1 ou 2, où la couche de substrat (1) contient une résine sélectionnée dans le groupe constitué par une résine à base de polyéthylène, un polychlorure de vinyle, un chlorure de polyvinylidène, un polychlorotrifluoroéthylène, une résine à base de polypropylène, un polyester saturé, un polyamide et des mélanges de ceux-ci.

4. Stratifié (10) d'un emballage blister (100, 200) selon l'une quelconque des revendications 1 à 3, où la couche de renfort (3) contient une résine sélectionnée dans le groupe constitué par un polyéthylène haute densité, un polychlorure de vinyle, une résine à base de polypropylène, un polyéthylène téréphtalate, un polyamide et des mélanges de ceux-ci.

5. Stratifié (10) d'un emballage blister (100, 200) selon l'une quelconque des revendications 1 à 4, où la couche absorbante (5) contient, dans l'ordre suivant, une couche de peau extérieure (5a) du côté de la couche de substrat (1), une couche de retenue absorbante (5b) qui présente un agent absorbant et une résine de liaison, et une couche de peau intérieure (5c).

6. Emballage blister (100, 200), comprenant le stratifié (10) selon l'une quelconque des revendications 1 à 5, et un couvercle (6) qui présente une couche de papier d'aluminium (2) et une couche de résine (6a), où la couche absorbante (5) du stratifié (10) et la couche de résine (6a) du couvercle (6), sont collées en partie au moins, et une poche est formée dans le stratifié (10), de telle sorte qu'un contenu (300) puisse être contenu entre le stratifié (10) et le couvercle (6).

7. Emballage blister (100, 200), où deux des stratifiés (10) selon l'une quelconque des revendications 1 à 5, sont collés en partie au moins en faisant face mutuellement à la couche absorbante (5), et une poche est formée dans les deux stratifiés (10), de telle sorte qu'un contenu (300) puisse être contenu dans la poche.

8. Produit de conditionnement sous blister, présentant l'emballage blister (100, 200) selon la revendication 6 ou 7, et un contenu (300) contenu dans la poche.
